(19) Europäisches Patentamt
European Patent Office
Office européen des brevets

(11) **EP 2 569 154 B1**

(12) **EUROPÄISCHE PATENTSCHRIFT**

(45) Veröffentlichungstag und Bekanntmachung des Hinweises auf die Patenterteilung:
**01.01.2020 Patentblatt 2020/01**

(21) Anmeldenummer: **11724365.9**

(22) Anmeldetag: **12.05.2011**

(51) Int Cl.:
**B32B 21/00** (2006.01)    **B27D 1/04** (2006.01)

(86) Internationale Anmeldenummer:
**PCT/EP2011/002351**

(87) Internationale Veröffentlichungsnummer:
**WO 2011/141171 (17.11.2011 Gazette 2011/46)**

(54) **MEHRSCHICHTIGER FURNIERHOLZ-FORMKÖRPER**

MULTILAYER VENEER - FORM

CONTREPLAQUÉ - FORME MULTICOUCHE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.05.2010 CH 747102010**

(43) Veröffentlichungstag der Anmeldung:
**20.03.2013 Patentblatt 2013/12**

(73) Patentinhaber: **3A Composites International AG
6312 Steinhausen (CH)**

(72) Erfinder:
• **FISCHER, Christian
1006 Lausanne (CH)**
• **LAVANCHY, Sebastien
CH-1147 Montricher (CH)**
• **WOLF, Thomas
CH-6280 Hochdorf (CH)**

(74) Vertreter: **Suisse Technology Partners AG
Querstrasse 5
8212 Neuhausen am Rheinfall (CH)**

(56) Entgegenhaltungen:
AT-A2- 507 249      DE-A1-102006 009 161
DE-U1- 29 502 290    US-A- 4 012 548
US-A- 6 162 312      US-A1- 2009 053 452
US-A1- 2009 053 452

**Beschreibung**

Die Erfindung betrifft eine Stirnholzplatte gemäss dem Oberbegriff von Anspruch 1, deren Verwendung sowie ein Verfahren zu deren Herstellung. Der nächstliegende Stand der Technik ist das Dokument US6162312A.

Kreuzverleimte Furniere sind aus der Baubranche als Bauteil oder Struktur, wie Platten oder Balken, bekannt wobei in Balken die Fasern sämtlicher Furnierlagen in Längsrichtung laufen können oder in Balken oder Platten ein Fünftel der Furniere quer verleimt sind. Beispielsweise Platten aus kreuzverleimten Furnieren weisen reduzierte feuchtigkeitsabhängige Massschwankungen in Querrichtung, bei gegebener Festigkeit, Geradheit und Massgenauigkeit, auf.

Die US-A- 6162312 beschreibt ein mit Harz imprägniertes Verbundmaterial aus einer Vielzahl von Holzlagen, wobei die Holzlagen aus einer Vielzahl dünner Holzleisten zusammengesetzt sind. Dabei sind die Holzleisten jeder Holzlage in einem Winkel zu den Holzleisten benachbarter Holzlagen angeordnet. US-A1-2009/053452 beschreibt eine Sperrholzplatte, bei der zumindest eine Sperrholzlage mit einem Faserverlauf, der diagonal zur Länge und Breite der Sperrholzlage verläuft und dessen Faserverlauf den Faserverlauf zumindest einer anderen Sperrholzlage diagonal schneidet.

DE-U1-29502290 beschreibt ein Snowboard in Schichtbauweise, bei dem der Kern aus miteinander verklebten Holzfurnierschichten besteht, wobei die einzelnen Holzfurnierschichten asymmetrisch angeschnitten und übergangslos miteinander verschliffen sind.

AT-A2-507249 beschreibt eine mit ober- und unterseitigen Längsnuten profilierte Kernschichtplatte aus Holz, wobei die Kernschicht zumindest eine einlagige Schrägfaserkernschicht enthält.

Aus WO2009/138197 sind Blöcke, beispielsweise aus gestapelten und trennfest verklebten Furniertafeln, bekannt. Inhärent in den Furniertafeln ist der Faserverlauf des ursprünglichen Holzstammes enthalten und die Furniertafeln sind mit gleichgerichtetem Faserverlauf zum Block geschichtet. Vom Block werden quer zum Faserverlauf sog. Hirnholzplatten abgetrennt und weiter verwendet.

Der Erfindung liegt die Aufgabe zugrunde, Stirnholzplatten aus einem mehrschichtigen Formkörper aus Furniertafeln zu beschreiben, wobei die Formkörper gegenüber gleichen Körpern aus Holz oder Holzschichten verbesserte Eigenschaften, insbesondere verbesserte Werte bezüglich der Schubspannung und der Biegefestigkeit aufweisen und ein Verfahren zu deren rationellen Herstellung, vorzuschlagen. Eine weitere Aufgabe besteht in der Bereitstellung mehrschichtiger Formkörper aus Furniertafeln, welche eine gegenüber bekannten Holzschichtlaminaten, insbesondere Holzformkörper aus Bohlen oder Kanteln, höhere Homogenität aufweisen.

Zur erfindungsgemässen Lösung der Aufgabe führt eine Stirnholzplatte mit den Merkmalen von Anspruch 1. Bevorzugte Ausführungsformen werden in den abhängigen Ansprüchen beschrieben.

Die Furnierhölzer sind aus Balsahölzern oder aus Holzprodukten mit Balsaholzanteilen erzeugt. Die Furniere aus Balsaholz werden aus Stämmen gewonnen, deren Holz beispielsweise eine Dichte von 0,07 bis 0,25 $g/cm^3$ aufweisen. Weiches Balsaholz weist eine Dichte von 0,07 bis 0,125 $g/cm^3$, mittelhartes Balsaholz von 0,125 bis 0,175 $g/cm^3$ und hartes Balsaholz von 0,175 bis 0,25 $g/cm^3$ auf. In technischen Anwendungsbereichen macht man sich das geringe Volumengewicht und die im Verhältnis zur geringen Rohwichte aussergewöhnlich hohe Druck- und Zugfestigkeit in Richtung des Faserverlaufs zunutze. Die erfindungsgemässen Formteile weisen stark erhöhte Spannungseigenschaften, insbesondere bezüglich Schubspannung und Steifigkeit, auf.

Bezüglich des Faserverlaufs im Formkörper soll wenigstens eines der Furnierhölzer von 60° bis 90°, vorzugsweise von 75° bis 90° und insbesondere um 90°, vom Faserverlauf des oder der anderen Furnierhölzer abweichen. Dadurch wird eine Anisotropie im Formkörper geschaffen, welche die aufgabengemäss hohe Schubspannungsfestigkeit sowie sehr hohe Biegefestigkeitseigenschaften ermöglicht. Dabei wird die Anisotropie durch den unterschiedlichen Faserverlauf benachbarter Furnierhölzer bewerkstelligt.

Insbesondere soll der Faserverlauf eines Furnierholzes vom Faserverlauf des anliegenden Furnierholzes oder der anliegenden Furnierhölzer um 45° bis 90°, zweckmässig um 60° bis 90°, vorzugsweise um 75° bis 90° und insbesondere um 90°, abweichen.

Die Winkelangaben in vorliegendem Text beziehen sich immer auf einen Vollkreis von 360°.

Die einzelnen Furnierhölzer werden derart aufeinander geschichtet, dass Breitseite auf Breitseite zu liegen kommt. Dabei ist auf den Faserverlauf, resp. die Wachstumsrichtung des Holzes zu achten. Die Fasern verlaufen in Richtung des Wachstums des Baumes aus dem das Furnierholz gewonnen worden ist.

Zweckmässig ist, dass der Faserverlauf wenigstens eines der Furnierhölzer vom Faserverlauf des oder der anderen Furnierhölzer um 45° bis 90° abweicht und dass der Faserverlauf von mehr als 50%, vorteilhaft von 66% und mehr und insbesondere aller Furnierhölzer um 22,5 bis 67,5° bezüglich der Richtung von in den Formkörper über die Stirnseiten eingeleiteter Kräfte abweicht.

In einem ersten Beispiel kann ein erstes Furnierholz abgelegt werden. Auf die Breitseite des ersten Furnierholzes wird über dessen Breitseite ein zweites Furnierholz abgelegt. Der Faserverlauf des zweiten Furnierholzes kann um 45 bis 90° vom Faserverlauf des ersten Furnierholzes abweichen. Ein drittes Furnierholz wird auf das zweite Furnierholz aufgelegt, wobei dessen Faserverlauf 45 bis 90° vom Faserverlauf des zweiten Furnierholzes abweicht, wobei vorzugsweise der Faserverlauf des dritten Furnierholzes dem Faserverlauf des ersten Furnierholzes entspricht. Entsprechend wird eine beliebige Zahl von Furnierhölzern zum Stapel geschichtet. Vorzugsweise sind im Stapel die Furnierhölzer alternierend geschichtet, so dass zwei Richtungen von Faserverläufen, die gegenseitig einen Winkel von 45 bis 90° einschliessen, vorhanden sind. Insbesondere ist die Faserverlaufsrichtung von Furnierholz zu Furnierholz alternierend.

In einem zweiten Beispiel kann ein erstes Furnierholz abgelegt werden. Auf die Breitseite des ersten Furnierholzes wird über dessen Breitseite ein zweites Furnierholz abgelegt. Der Faserverlauf des zweiten Furnierholzes kann um 45° vom Faserverlauf des ersten Furnierholzes abweichen. Ein drittes Furnierholz wird auf das zweite Furnierholz aufgelegt, wobei dessen wiederum 45° vom Faserverlauf des zweiten Furnierholzes abweicht und der Faserverlauf des dritten Furnierholzes um 90° vom Faserverlauf des ersten Furnierholzes abweicht. Entsprechend wird eine beliebige Zahl von Furnierhölzern zum Stapel geschichtet. Vorzugsweise sind im Stapel die Furnierhölzer alternierend geschichtet, so dass drei Richtungen von Faserverläufen, die gegenseitig einen Winkel von 45° einschliessen, vorhanden sind. Insbesondere ist die Faserverlaufsrichtung von Furnierholz zu Furnierholz alternierend.

In einem dritten Beispiel wird wie im ersten Beispiel vorgegangen, jedoch statt jeweils eines einzelnen ersten und/oder zweiten Furnierholzes werden Gruppen von 2, 3, 4 oder 5 Furnierhölzern mit gleichlaufendem Faserverlauf eingesetzt.

In einem vierten Beispiel wird wie im zweiten Beispiel vorgegangen, jedoch statt jeweils eines einzelnen ersten und/oder zweiten und/oder dritten Furnierholzes werden Gruppen von 2, 3, 4 oder 5 Furnierhölzern mit gleichlaufendem Faserverlauf eingesetzt.

Anordnungen gemäss dem ersten Beispiel sind:

$$(I-)_y$$

$$(I-)_y I$$

Anordnungen gemäss dem zweiten Beispiel sind:

$$(I \,/\, -)_y$$

$$(I \,/\, -)_y I$$

Beispielhafte Anordnungen gemäss dem dritten Beispiel sind:

$$II - II - II$$

$$II - III - II$$

$$II - \!\!- II - \!\!- II$$

$$II - \!\!- III - \!\!- II$$

$$II - \!\!- IIII - \!\!- II$$

$$(I - II - I)_x$$

$$(I - \!\!- II - \!\!- I)_x$$

$$(II - \!\!- II - \!\!- II)_x$$

$$(II - \!\!- III - \!\!- II)_x$$

$$(II - \!\!- IIII - \!\!- II)_x$$

Beispielhafte Anordnungen gemäss dem vierten Beispiel sind:

$$II \,/ - II - / \,II$$

$$II \,/\!- / \,II \,/\!- / \,II$$

$$II \,/\!- / \,III \,/\!- / \,II$$

$$II \,// - - II \,// - -$$

$$II \,// - - III - - // \,II$$

$$II \,//\!- - IIII - - // \,II$$

$$(I \,/\!- / \,II \,/ -\!/ \,I)_x$$

$$(I \,// - - II \,// - - I)_x$$

$$(\text{III } /// - - -)_x$$

Wobei "I" jeweils für ein Furnierholz mit Faserverlauf in einer Richtung, "-" für jeweils ein Furnierholz mit Faserverlauf gedreht um beispielsweise 90° gegenüber "I" und "/" jeweils ein Furnierholz mit Faserverlauf gedreht um beispielsweise 45° gegenüber "I", x eine Zahl von beispielsweise 1 bis 50 und y eine Zahl von beispielsweise 1 bis 100 bedeuten kann.

In einer Verfahrensweise können Furnierhölzer aus Baumstämmen z.B. durch Tangentialschnitt, in einer Furnierschälmaschine zu dünnen Holzlagen, demnach zu Holzfurnieren in Form von Furniertafeln, Holzblätter, Schälfurnieren, Furniere oder sog. Veneers, verarbeitet werden. Die Holzlagen, auch Furniertafeln genannt, können auf das erforderliche oder gewünschte Mass zurecht geschnitten werden.

Aus dem Stand der Technik ist anstelle von Furnieren auch die Verwendung von Bohlen bekannt, wobei üblicherweise vierseitig bearbeitete Bohlen, auch Kantelhölzer genannt, zu Blöcken verleimt werden. Da die Holzdichte der Baumstämme über ihren Querschnitt, aber auch über die Baumlänge stark variiert, weisen entsprechende Blöcke aus Bohlen eine sehr unterschiedliche Dichteverteilung auf. Daher werden die Bohlen häufig durch ein Ausleseverfahren ausgewählt, so dass für einen Block nur in einem vorgegebenen Dichtebereich liegende Bohlen verwendet werden. Im Vergleich zur Verwendung von Bohlen weisen Furniere eine wesentlich gleichmässigere Dichteverteilung auf. Deshalb weisen die für den erfindungsgemässen Formkörper verwendeten Furnierhölzer gegenüber herkömmlichen Bohlen eine wesentlich höhere Homogenität auf, was sich im Folgenden auch im fertigen Formkörper aus verklebten Furnierhölzer zeigt.

Die Länge und Breite der einzelnen Holzlagen kann beispielsweise von 0,5 m bis 2,5 m, zweckmässig bis 1,8 m und vorteilhaft bis 1,2 m betragen. Die Dicke einer Holzlage kann von 0,5 mm bis 10 mm betragen. Die Holzlagen werden in der Regel einem Trocknungsverfahren ausgesetzt und danach weiter verarbeitet. Die Holzlagen werden beispielsweise mit der vorgesehenen Menge an Klebstoff allseitig oder auf eine oder beide Breitseiten, durch aufsprühen, aufdüsen, auftragen mit Schlitzdüsen, rollen, aufstreichen oder bestäuben, beschichtet. Fallweise kann zum Verkleben der Holzlagen zwischen den Holzlagen eine Klebefolie eingesetzt werden. Die beleimten Holzlagen können - - fallweise aus Fraktionen verschiedener Dichte und/oder Holzqualität gemischt - Breitseite auf Breitseite, zu einem Stapel geschichtet werden. Durch seitlichen Druck durch Rollen oder Wangen kann der Stapel gerichtet werden. Mittels Druck auf den Stapel und/oder Temperatureinwirkung, jedoch auch ohne äussere Druckeinwirkung oder Temperatureinwirkung, kann der Klebstoff aktiviert werden, wobei entsprechend dem Klebstoff dieser aufschäumen kann, schmilzt, chemisch reagiert etc. und die Holzlagen gegenseitig zu einem Formkörper in Block- oder Plattenform trennfest verklebt werden. Die Abmessungen der Formkörper, die in der Regel die Form einer Platte, aufweisen, richten sich nach den apparativen Gegebenheiten. Die Seitenkantenlängen können z.B. von 0,50 m bis 1,80 m betragen. Aus praktischen Gründen beträgt die Länge beispielsweise von 0,60 m bis 1,20 m. Platten, beispielsweise einer Dicke von 2 cm bis 30 cm können, beispielsweise aus 2 bis 100 übereinander geschichteten Holzlagen erzeugt sein. Die Formkörper können nach Massgabe des Bedürfnisses zugesägt oder aufgetrennt werden.

Bei der Verarbeitung, durch seitlichen Druck durch Rollen oder Wangen und vertikalen Druck durch ein Band, Doppelband oder Rollen, soll der angewendete Druck derart gewählt werden, dass das Zell- resp. Fasergefüge des Holzes, insbesondere bei der Verarbeitung von Balsaholz, nicht verändert oder beschädigt wird, insbesondere, dass durch Kompression die Dichte des Holzes nicht oder nur geringfügig verändert wird. Der Pressdruck soll niedrig eingestellt sein, da bei zu hohem Pressdruck auch das Holzgefüge insgesamt zusammengepresst wird. Der angewendete Druck zwischen zwei Rollen und/oder Bändern kann bis 50 bar, zweckmässig 0,5 bis 5 bar betragen.

Als Klebstoff können beispielsweise Klebstoffe, wie physikalisch abbindende Klebstoffe oder chemisch härtende Klebstoffe angewendet werden. Beispiele sind Ein- oder Zweikomponenten-Polyurethankleber (PUR), Ein- oder Zweikomponenten-Epoxidharzkleber, Phenoplaste, wie Phenol-Formaldehydkleber, harnstoffhaltige Leime, Melamin-Harnstoff-Phenol-Formaldehydkleber, Isocyanatkleber, Polyisocyanate, wie polymeres Diphenylmethandiisocyanat, Cyanacrylatkleber, Acrylharzkleber, Methylmetacrylatkleber, Heisskleber, Kolophonium, Weissleim, insbesondere enthaltend Polyvinylacetat, etc.

Die Holzlagen oder Furniertafeln können bevorzugt mit einem Weissleim, insbesondere einem polyvinylacethaltigen Leim, einem Harnstoffleim, einem polyurethanhaltigen Klebstoff oder einem aufschäumenden polyurethanhaltigen Klebstoff, gegenseitig verbunden werden.

Fallweise kann die Verklebung nur formhaltig, d.h. ohne Anwendung eines äusseren Druckes, erfolgen. Ein aufschäumender polyurethanhaltiger Klebstoff kann sowohl als Kleber, als auch als Füller zwischen den Holzlagen oder Furniertafeln wirken. Bevorzugte schäumende Kleber, gegebenenfalls Schaumkleber, sind u.a. 2-Komponenten-Klebstoffe, so auch aufschäumende Klebstoffe, z.B. auf PUR-Basis, oder 1-Komponenten-Klebstoffe, auch aufschäumende Klebstoffe, z.B. auf PUR-Basis, und solche, die unter Einfluss von Feuchtigkeit reagieren. Die zur Reaktion benötigte Feuchtigkeit kann beispielsweise durch die Holzfeuchtigkeit allein oder durch Befeuchten des Holzes beigestellt werden. Die Klebstoffe können unter Wärmeeinfluss reagieren, abbinden oder aushärten. Es können die Klebstoffe unter Druck reagieren, abbinden oder aushärten. Oder, es können die Klebstoffe unter Wärmeeinfluss und Druck reagieren, abbinden oder aushärten. Günstig sind Klebstoffe, die ohne Hitze reagieren, aushärten oder abbinden, demnach solche, die ein Kalthärten oder sog. "cold curing" ermöglichen. Auch günstig sind Klebstoffe, die ohne von aussen angewendeten Druck reagieren, abbinden oder aushärten. Wie vorstehend erwähnt, kann durch viskoses Verhalten des Klebstoffes oder durch den Schäumprozess der Klebstoff in die Zwischenräume oder Klebefugen zwischen den Spänen oder an die gegenseitigen Auflageflächen, resp. Klebefugen, der Holzlagen gelangen und dazwischen liegende Poren, Lücken oder Spalten teilweise und vorteilhaft vollständig ausfüllen. Aufgabe des Klebstoffes ist es, zwischen den Holzlagen eine trennfeste Verbindung zu schaffen.

Um eine Verdichtung der Holzfurniere zu vermeiden und eine vollständige Fugenfüllung bei rauen Furnieroberflächen zu erreichen, erfolgt insbesondere bei Verwendung von Balsaholz als Furnierlage das Verkleben der Furnierschichten, d.h. die Sandwichherstellung, besonders bevorzugt mit einem schäumenden Klebstoff im Wesentlichen drucklos oder mit einem geringen Druck von weniger als 1.0 bar, insbesondere einem Druck zwischen 0.3 und 1.0 bar. Ziel dieses Verfahrensschrittes ist das Erreichen einer minimalen Formkörperdichte mit gleichzeitig möglichst homogenen inneren Festigkeitseigenschaften und minimaler Harzeindringung während dem Infusionsprozess (Beaufschlagung der Balsaholzfurniere mit Klebstoff).

Die Formkörper enthalten einen Holz- und einen Klebstoffanteil. Der Holzanteil eines Formkörpers kann beispielsweise von 60 bis 99 Vol.-% betragen. Der Klebstoff, ist vorteilhaft in Anteilen von 1 bis 40 Vol.-% vorhanden. In der Regel liegt der Klebstoff in Anteilen von 1 bis 15 Vol.-%, zweckmässig 2 bis 10 Vol.-% und vorzugsweise 3 bis 5 Vol.-%, bezogen auf das Volumen des Formkörpers, vor.

Vorteilhaft sind Formkörper, in denen der ausreagierte Klebstoff die Dichte des umgebenden Holzes oder eine 0 bis zu 20 Gew.-%, vorzugsweise 0 bis zu 10 Gew.-%, höhere oder niedrigere Dichte, als die des umgebenden Holzes aufweist. Der ausreagierte, wie abgebundene oder aufgeschäumte etc., Klebstoff kann Dichten oder Raumgewichte von 50 kg/m$^3$ bis 300 kg/m$^3$ aufweisen. Insbesondere aufgeschäumte Klebstoffe weisen vorteilhaft ein Raumgewicht von 50 kg/m$^3$ bis 240 kg/m$^3$ auf.

Die Furnierhölzer sind Balsaholzfurniere. Da Balsaholz ein Naturprodukt darstellt, weist es je nach Pflanzensorte, Standort oder durch Wachstumseinflüsse etc. unterschiedliche Dichten oder Raumgewichte auf. Vorliegend fällt die Wahl bevorzugt auf Hölzer mit Dichten von etwa 80 bis 240 kg/m$^3$. Bezüglich der Formkörper nach vorliegender Erfindung in der praktischen Anwendung ist ein Raumgewicht von beispielsweise kleiner als 200 kg/m$^3$ vorteilhaft. Günstige Raumgewichte liegen bei 100 bis 200 kg/m$^3$, vorteilhaft liegen die Raumgewichte bei 120 bis 180 kg/m$^3$ und insbesondere bei 160 kg/m$^3$.

Aus einem Formkörper werden Platten hergestellt, wobei dazu die Trenn- oder Sägerichtung quer zur Breitseite verläuft, d.h. parallel zu einer Stirnseite. Bevorzugt schliesst der Faserverlauf der einzelnen Furnierhölzer mit der Flächennormalen auf die Platte einen Winkel von 22,5 bis 45°, insbesondere um 45°, ein. Ganz besonders bevorzugt verläuft der über alle verklebten Furnierhölzer gemittelte Faserverlauf im Wesentlichen senkrecht zur Plattenebene.

Die Platten eignen sich bevorzugt für eine Zug- oder Druckbeanspruchung senkrecht zur Plattenebene. Weiter bevorzugt eignet sich die Platte für eine Scher- oder Biegebeanspruchung in der Plattenebene, wobei die Scherbeanspruchung insbesondere quer zum gemittelten Faserverlauf verläuft.

Vorliegende Erfindung betrifft auch ein Verfahren zur Herstellung der erfindungsgemässen Stirnholzplatten. Nach dem Verfahren werden die Balsaholzfurniere mit Klebstoff beschichtet, die beschichteten Balsaholzfurniere bezüglich des Faserverlaufs ausgerichtet und gestapelt, wobei der Faserverlauf wenigstens eines der einzelnen Holzfurniere um 45 bis 90° vom Faserverlauf des oder der anliegenden Holzfurniere abweicht, der Klebstoff aktiviert und unter Ausbildung von Haftkraft durch Kalthärten, drucklos oder unter Einfluss von Wärme und/oder Druck zum Formkörper verfestigt werden, und der Formkörper quer zur Breitseite zu einer Anzahl Stirnholzplatten gesägt oder anderweitig getrennt wird.

Ein bevorzugtes Verfahren zur Herstellung der Formkörper besteht darin, dass die Holzfurniere mit dem Klebstoff beschichtet, bezüglich des Faserverlaufes ausgerichtet und aufeinander geschichtet, resp. gestapelt werden, so dass der Faserverlauf des einzelnen Holzfurniers vom Faserverlauf des nächst darauf liegenden Holzfurniers um 60° bis 90°, vorzugsweise um 75° bis 90° und insbesondere um 90° von der Richtung des Faserverlaufes abweicht.

Die einzelnen Holzfurniere sind in ihren Abmessungen durch die Länge und die Dicke des geschälten Stammes begrenzt. In den Formkörpern liegt der Faserverlauf schräg oder diagonal zur Körperlänge und Breite. Ein Ausschneiden von Abschnitten aus dem Furnierholz, mit dem Ziel einen schrägen Faserverlauf im Formkörper zu erzielen, würde zu grossen Verlusten an Furnierholz führen. Deshalb kann es sich als vorteilhaft erweisen, die gewonnen Furnierhölzer diagonal oder schräg zu Abschnitten zu teilen und über die Abschnitte über die Stirnkanten wieder zu fügen. Ein Fügen durch Verbinden entlang der Stirnkanten, kann durch Kleben erfolgen. Beispielsweise können etwa quadratische Furnierhölzer diagonal in dreieckige Abschnitte geteilt werden. Jeweils vier der Abschnitte werden über die Stirnseiten, welche die Katheten bilden, wieder gefügt. Es entsteht erneut ein quadratisches Furnierholz, jedoch mit diagonal laufendem Faserverlauf.

Der beschriebene Formkörper kann nun als solcher weiter verwendet werden. Bei den Formkörpern handelt es sich beispielsweise um Platten, Balken, Bohlen oder Blöcke, die als solche verwendet werden können oder durch Bearbeitung, wie eine spanende oder Material abtragende Bearbeitung, zu Streben, Stützen, Trägern, Böden, Einlageteile, Strukturteile, Teile von Mehrschichtmaterialien oder Composite-Materialien usw. weiterverarbeitet werden können. Beispielsweise können Formköper mit einer Seitenkantenlänge, einer Breite und einer Höhe von je 0,6 bis 1,8 m, vorteilhaft von je 0,6 bis 1,2 m, erzeugt und direkt eingesetzt oder gegebenenfalls weiter verarbeitet werden.

Die Formkörper weisen zwei Breitseiten und eine umlaufende Stirnseite auf. Die Stirnseite kann Ecken, Kanten oder Rundungen aufweisen. Eine in einen Formkörper eingeleitete Kraft muss insbesondere gleichgerichtet den Holzlagen laufen und wird zweckmässig über die Stirnseiten ein- oder abgeleitet. Allfällige Befestigungsmittel leiten die Kraft vorteilhaft dergestalt in den Formkörper ein, dass die Belastung richtungsgleich den Holzlagen läuft. Bezüglich der Richtung der in den Formkörper über die Stirnseiten der über die Befestigungsmittel ein- oder abgeleiteten Kräfte weicht erfindungsgemäß der Faserverlauf der Holzlagen, resp. Furnierhölzer, um 22,5 bis 67,5° ab. Vorzugsweise weicht der Faserverlauf der Holzlagen, resp. Furnierhölzer, um 45° ab.

Mit den erfindungsgemäss gewonnen Stirnholzplatten können beispielsweise durch ein- oder beidseitiges Aufbringen auf die Breitseiten und/oder auf die Stirnseiten von Kunststoffplatten, -schichten oder -folien, von mit Textil-, Glas-, Kunststoff- oder Carbonfasern verstärkten Kunststoffplatten oder -schichten, Metallplatten oder Blechen, Holzplatten, Geweben, Gewirken, Gestricken, Vliesen, von mit Kunstharzen imprägnierten Geweben, Gewirken, Gestricken, Vliesen, mit Kunststoff oder Metallfolien usw. noch stärker belastbare Verbundwerkstoffe oder Werkstoffe mit erweiterten funktionellen Eigenschaften geschaffen werden.

Die Formkörper werden in Platten beliebiger Dicke, wie in Dicken von 3 bis 300 mm, vorteilhaft von 8 bis 100 mm, aufgeteilt. Die Formkörper können dazu durch horizontales Schneiden oder Sägen, z.B. mittels Bandsäge, in Platten geschnitten werden. Der Faserverlauf in den Furnierhölzern erstreckt sich in solchen Platten über die Höhe. Der Faserverlauf jeden Furnierholzes erreicht schräg die Ober- und Unterseite. Über die Seitenflächen erstreckt sich der Faserverlauf schräg zu den Seitenkanten. Fallweise können einzelne oder eine Anzahl von Furnierhölzern in einem Formkörper parallel zu den Seitenkanten laufen und entsprechend senkrecht von der Unter-, resp. Oberseite abragen. Auf die Ober- und/oder Unterseite der Platte, sinngemäss eine verbesserte Hirnholzplatte darstellend, voll- oder teilflächig, kann nun eine Deckschicht aus beispielsweise einer Metallfolie, einem Metallband oder einer Metallplatte, aus verstärkten, wie faserverstärkten, oder unverstärkten Kunststofffolien oderplatten, aus Papier, aus Pappe, aus Holzelementen, wie Brettern oder Furnieren, Glas, Keramik, Stein usw. angebracht, beispielsweise aufgeklebt oder auflaminiert, werden. Die Platten können auch in Hohlräume eingelegt oder eingeklebt oder können in eine Kunststoffmatrix eingegossen werden. In diesen Anwendungen dienen die Platten der strukturellen Verstärkung mechanisch stark belasteter, jedoch leichtgewichtiger Vorrichtungen. Solche Vorrichtungen können Flügel von Windkraftmaschinen oder Propeller sein.

Die Platten werden bevorzugt durch Sägen oder anderweitiges Trennen eines Formkörpers quer zur Breitseite, d.h. parallel zu einer Stirnseite, hergestellt. Dabei schliesst der Faserverlauf der einzelnen Furnierhölzer mit der Flächennormalen auf die Platte bevorzugt einen Winkel von 22,5 bis 45°, insbesondere um 45°, ein. Dadurch werden die Platten im Sinne einer Stirnholzplatte (Endgrain-Platte) verwendet, wobei im Gegensatz zu herkömmlichen Stirnholz- oder Hirnholzplatten die Plattenoberfläche den Faserverlauf der im Formkörper enthaltenen Holzfurniere nicht quert, sondern in einem von einem rechten Winkel verschiedenen Winkel schneidet. Ganz bevorzugt schneidet der Faserverlauf benachbarter Holzfurniere die Plattenoberfläche symmetrisch, d.h. der spitze Winkel zwischen dem Faserverlauf benachbarter Holzfurniere und der Plattenoberfläche ist betragsmässig im Wesentlichen gleich. Die erfindungsgemässen Stirnholzplatten unterscheiden sich wesentlich von den handelsüblichen Sperrholzplatten (Flatgrain-Sperrholzplatten), bei denen der Faserverlauf aller Furnierschichten im Wesentlichen parallel und auch parallel zu den Plattenoberflächen liegt.

Weiter bevorzugt werden Furnierschichten mit nur zwei unterschiedlichen Faserverläufen verwendet, wobei die Furnierschichten mit unterschiedlichem Faserverlauf alternierend eingesetzt werden, um eine möglichst hohe Homogenität der Formkörpereigenschaften zu erreichen.

Die erfindungsgemässen Stirnholzplatten können in vielfacher Weise verwendet werden. Beispielsweise stellen sie Ausgangsprodukte oder Fertigprodukte im Bereich hochbelastbarer Einbauteile im Transportbereich, wie beispielsweise für Flugzeuge, Bahnen, LKW, Busse, Schiffe oder im Automobilbau oder in Konstruktionen, wie Brücken, als Brückenträger, als Brückenbefahr- und Brückenbegehflächen dar. Dabei kann es sich insbesondere um Einbauteile, die unter hoher Last, wie hoher Schub- und/oder Zugspannung stehen oder bezüglich Schub- und/oder Zug zeitweise stark belastet werden, handeln. Dabei erfolgt die Zug- oder Druckbeanspruchung senkrecht zur Plattenebene oder senkrecht zur Stirnseite des Formkörpers, oder eine Scherbeanspruchung erfolgt in der Plattenebene oder in der Ebene zweier gegenüberliegender Stirnseiten des Formkörpers. Die Formkörper können beispielsweise an sich, jedoch auch als Kernmaterial, als Schichtstoff oder als Composite-Materialien, als Verbund oder in einem Verbund, in Transportmitteln, wie in Booten, Schiffen, Bussen, Lastkraftwagen, Eisenbahnfahrzeugen usw., als Decken, Böden, Zwischenböden, Wandverkleidungen, Abdeckungen usw., eingesetzt werden. Die erfindungsgemässen Stirnholplatten aus Balsaholz können aufgrund der geringen Dichte als Ersatz für herkömmliche Leichtbaumaterialien, z.B. als Träger, Streben, Stützen, Profile, Platten usw. und als Kernmaterialien in mehrschichtigen Werkstoffen dienen. Weitere Anwendungen der Stirnholzplatten sind Füll-, Einlege- oder Verstärkungskörper in Windflügeln von Windkraftwerken oder als Propeller oder in Propellern von Strömungserzeugungsvorrichtungen für Fluide, wie Gase, oder Flüssigkeiten.

Anhand der Figuren 1 bis 6 ist vorliegende Erfindung beispielhaft illustriert.

  Figur 1 zeigt die Ansicht eines Formkörpers.

  Figur 2 stellt eine schematische Skizze eines Formkörpers dar.

  Figur 3 zeigt Beispiele von Schichtungen anhand zweier Formkörper.

  Figur 4 zeigt den in einem Formkörper realisierten Anstieg der Schubspannung.

  Figur 5 zeigt eine mögliche Weiterverarbeitung der Formkörper.

  Figur 6 zeigt eine Variante zur rationellen Erzeugung von Furnierhölzern für die Herstellung vorliegender Formkörper.

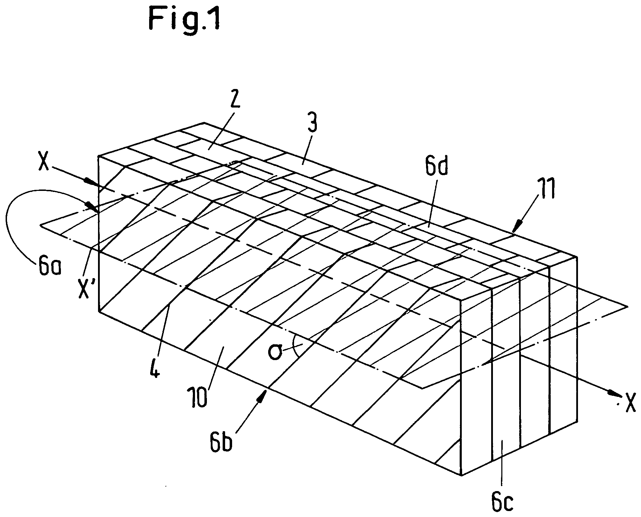

Ein Formkörper 1 in Figur 1, beispielhaft in Quaderform gezeigt, weist Breitseiten 10, 11 und eine umlaufende Stirnseite 6 auf. Die Stirnseite 6 ist durch die Quaderform in vier Abschnitte 6a, 6b, 6c und 6d aufgeteilt. Der Formkörper ist durch gestapelte und gegenseitig verklebte Furnierhölzer 2, 3 etc. gebildet. Die einzelnen Furnierhölzer weisen eine Richtung des Faserverlaufs auf. Nach vorliegender Erfindung weicht der Faserverlauf wenigstens eines der Furnierhölzer vom Faserverlauf des oder der anderen Furnierhölzer um 45° bis 90° ab und der Faserverlauf wenigstens eines Teiles der Furnierhölzer weicht um 22,5 bis 67,5° bezüglich der durch den Formkörper hindurch laufenden Ebene X' (strichpunktiert umrundet und fein schraffiert angedeutet) ab, wobei die eingeleiteten oder ausgeleiteten Kräfte in Richtung der Achse X laufen, ab. Die Richtung des Faserverlaufs weicht, wie vorliegend beispielhaft dargestellt, zwischen zwei einander anliegenden Furnierhölzern jeweils um 90° ab. Winkel $\sigma$, d.h. der Winkel zwischen der Ebene X' und dem Faserverlauf, kann von 22,5° bis 67,5° betragen. Durch den Formkörper hindurch läuft eine mit Pfeil verdeutlichte Achse X und eine fein schraffierte Ebene X'. Bezüglich der Ebene X' weicht der eingezeichnete Faserverlauf aller Furnierhölzer um beispielhaft 45° ab. Zur Erreichung optimaler Lastwerte im Formkörper wirken die ein-, resp. ausgeleiteten Kräfte insbesondere in X-Richtung. Die Kräfte werden insbesondere über die, resp. in Richtung der Stirnseiten 6a und 6c ein-, resp. ausgeleitet.

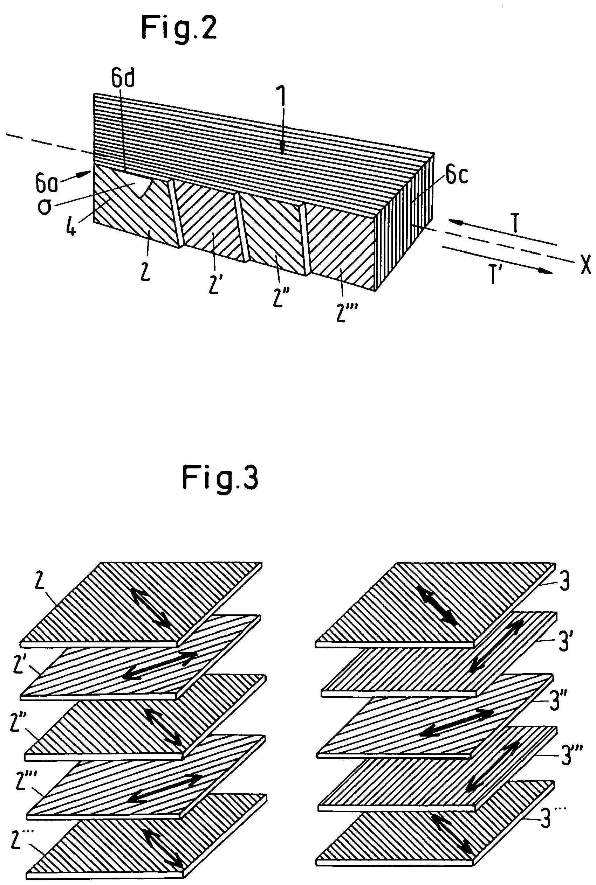

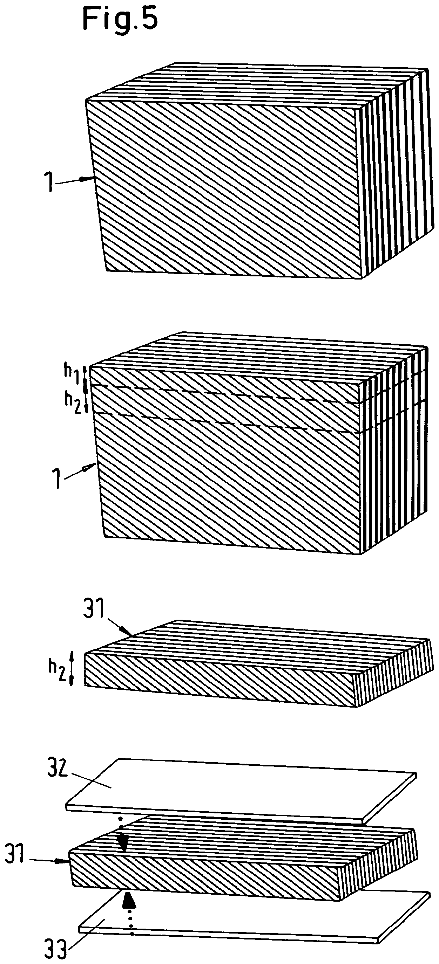

Im in Figur 2 dargestellten Teil eines Formkörpers 1, aus einer Vielzahl von Furnierhölzern, sind zur Erkennbarkeit und Verdeutlichung der Faserverläufe die ersten drei Furnierhölzer 2, 2', 2" gegenüber dem jeweils darunter liegenden Furnierholz 2', 2", 2'" etwas zurückweichend gezeichnet. Die Furnierhölzer 2, 2', 2", 2'" usw. sind über deren Breitseiten aufeinander gestapelt. Dazwischen liegen die nicht speziell gekennzeichneten Klebeverbindungen, welche die Furnierhölzer trennfest miteinander verbinden. Die jeweilige Schraffur auf jedem Furnierholz 2, 2', 2", 2'" zeigt den jeweiligen Faserverlauf 4. Der zwischen Faserverlauf 4 und Stirnseite 6d eingeschlossene Winkel $\sigma$ in Furnierholz 2 ist mit $\sigma$ bezeichnet. Beispielhaft läuft hier die Stirnseite 6d parallel zu einer gedachten Ebene X'. Winkel $\sigma$ kann von 22,5° bis 67,5° betragen. Abgebildet ist beispielhaft ein Winkel von 45°. Das darunter liegende Furnierholz 2' hat einen Faserverlauf, der beispielhaft um 90° vom Faserverlauf des Furnierholzes 2 gedreht angeordnet ist. Wird nun eine Kraft T oder T' in Pfeilrichtung, beispielsweise über die Stirnseiten 6a, 6c in den Formkörper 1 ein- oder ausgeleitet, so zeigt der Formkörper 1 in Pfeilrichtung T, resp. T' eine gegenüber der Einleitung derselben Kraft in einen Vergleichsformkörper mit nur in Pfeilrichtung T,T' oder senkrecht zu T,T' laufendem Faserverlauf eine Anstieg der maximalen Schubspannung bis zum Versagen des Formkörpers 1 gemäss den Werten in Figur 5.

Figur 3 stellt einen Ausschnitt aus einem Formkörper dar, wobei die einzelnen Furnierhölzer im Sinne einer Explosionszeichnung auseinandergezogen und voneinander getrennt dargestellt sind. Der zwischen den Furnierhölzern angeordnete Klebstoff ist nicht gezeichnet. In Figur 3a) sind die Furnierhölzer 2 und 2' bezüglich ihres Faserverlaufes beispielhaft um 90° gegeneinander verdreht. Der Faserverlauf ist jeweils schematisch als Schraffur erkennbar und durch die fett eingezeichneten Pfeile verdeutlicht. Der Faserverlauf des Furnierholzes 2" ist gegenüber dem Faserverlauf des Furnierholzes 2'" wiederum um 90° verdreht. So wechseln sich entsprechend die Furnierhölzer 2⋯ usw. ab, bis zum Erreichen der gewünschten Stapelhöhe. Es wird die Schichtfolge (I - )$_y$ gezeigt.

In Figur 3b) sind die Furnierhölzer 3 und 3' bezüglich ihres Faserverlaufes beispielhaft um 45° gegeneinander verdreht. Der Faserverlauf des Furnierholzes 3" ist gegenüber dem Faserverlauf des Furnierholzes 2'" wiederum um 45° verdreht. So wechseln sich entsprechend die Furnierhölzer 3⋯ usw. ab, bis zum Erreichen der gewünschten Stapelhöhe. Es ist die Schichtfolge (I / - )$_y$ gezeigt.

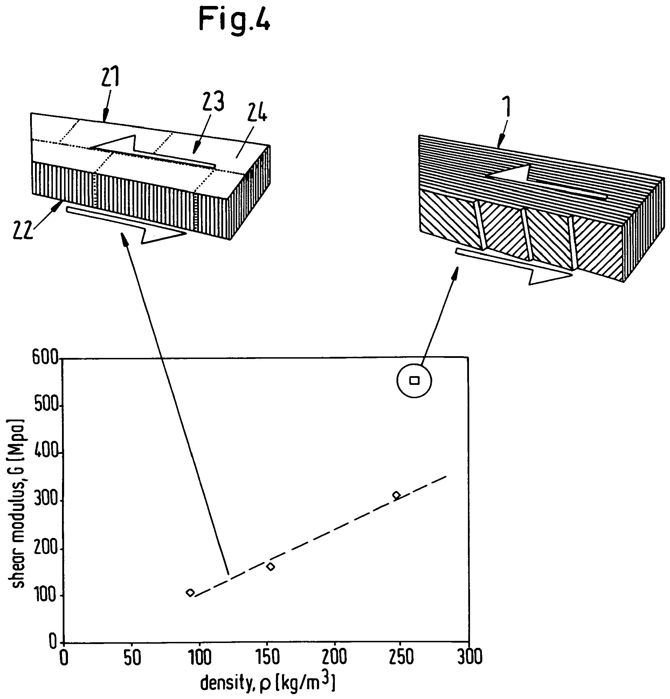

Figur 4 zeigt die Schubspannungswerte für unterschiedliche Formkörper. Der gezeigte Körper stellt eine Hirnholzplatte 21 dar. Derartige Hirnholzplatten 21 gehören zum Stand der Technik. Beispielsweise ausgehend von einem Balsabaumstamm, durch Sägen in Wachstumsrichtung von Stämmen von Balsaholzbäumen, werden Stammabschnitte mit polygonalem, insbesondere rechteckigem Querschnitt, erzeugt. Die Stammabschnitte können durch einen weitern Sägevorgang, diesmal quer zum Faserverlauf, auf etwa gleichmässige Länge zu den Balsaholzkanteln verarbeitet werden. Die Balsaholzkanteln können an ihren Schmalseiten, d.h. entlang dem Faserverlauf, gegenseitig zu Blöcken verklebt werden. Pfeil 24 deutet auf eine solche Balsholzkantel. Die punktierten Linien stellen die Klebenähte dar. Von den Blöcken können quer zur Faserrichtung die Hirnholzplatten 21 durch Sägen abgetrennt werden. In der Hirnholzplatte 21 erstreckt sich der gesamte Faserverlauf senkrecht von der nach unten weisenden Begrenzungsfläche 22 zu der nach oben weisenden Begrenzungsfläche 23. Der Formkörper 1 aus Figur 2 zeigt zur Demonstration der Faserverläufe zeichnerisch teilweise freigelegte Furnierhölzer. An den freigelegten Flächen werden die Faserverläufe sichtbar. Die fett eingezeichneten Pfeile auf und unter den Körpern zeigen jeweils die Richtung der eingeleiteten Kräfte. In der Grafik "Shear Modulus" sind drei Werte der Schubspannung ("shear modulus") gegen die Dichte ("density") der Hirnholzplatte 21, eingetragen. Die 3 gemessenen Werte sind durch eine gestrichelte Linie verbunden. Der gemessene Schubspannungswert für den Formkörper 1 nach der Erfindung ist ebenfalls in der Grafik eingetragen. Deutlich erkennbar ist, dass sich der Wert für die Schubspannung für den Formkörper 1 nach der Erfindung deutlich über der Linie der Werte für die Hirnholzplatte 21 befindet. Der Anstieg des für den Formkörper 1 gemessenen Wertes für die Schubspannung liegt 75% über einem vergleichbaren Wert für die Hirnholzplatte 21 gemäss dem Stand der Technik.

In Figur 5 ist eine Weiterbildung des Formkörpers 1 gezeigt. Der Formkörper wird durch horizontale Schnitte in Platten beliebiger Höhe, beispielhaft gezeigt als Höhen $h_1$ und $h_2$, aufgeteilt. Es entsteht eine Platte 31, hier als Beispiel gezeigt mit der Höhe $h_2$. Die Platte 31 kann nun ein- oder beidseitig bezüglich ihrer Ober- und/oder Unterseite mit Deckschichten 32, 33 bedeckt werden. Beispiele von Deckschichten sind Platten oder Bleche aus Metall, wie z.B. Aluminium, Platten aus Kunststoffen oder aus faserverstärkten Kunststoffen, mit Holz, wie Brettern, etc. Die Deckschichten 32 und/oder 33 werden in der Regel mit der Platte 31 verklebt. Dazu werden die Deckschichten 32 und/oder 33 in Pfeilrichtung gegen die Platte 31 geführt und beispielsweise mittels eines Klebstoffes oder einer Klebfolie (nicht gezeigt), fallweise unter Erhitzung und/oder Druck, bis der Klebstoff abgebunden hat, verklebt.

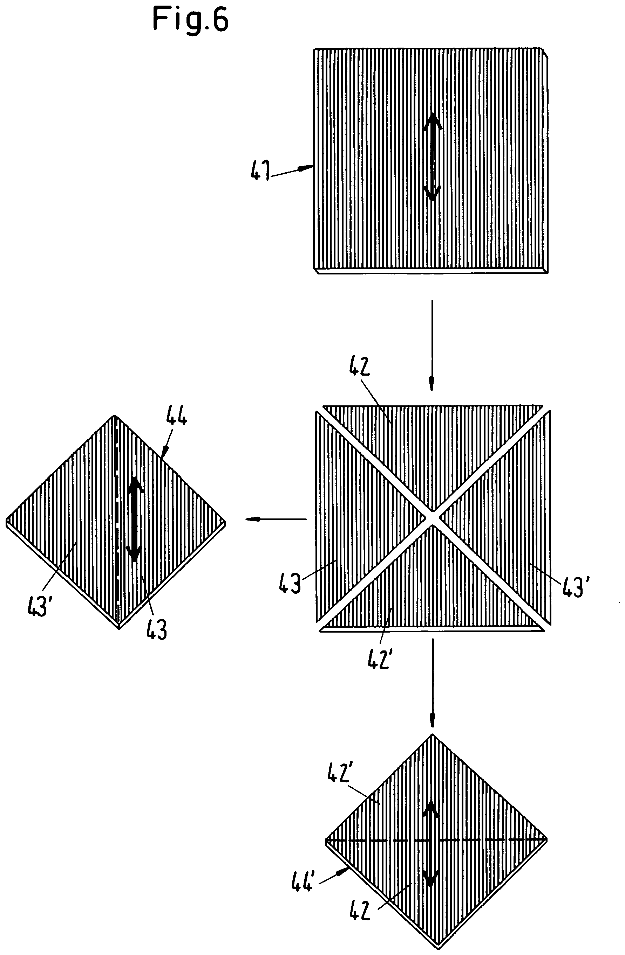

Figur 6 zeigt beispielhaft eine mögliche Herstellung der einzelnen Holzfurniere. Da die Holzfurniere in ihren Abmessungen durch die Länge und die Dicke des geschälten Stammes begrenzt sind und in den Formkörpern der Faserverlauf diagonal oder schräg zur Körperlänge und Breite vorliegen soll, würde ein blosses Ausschneiden von Abschnitten aus dem Furnierholz zu grossen Verlusten an Furnierholz führen. Deshalb kann das aus den Stämmen gewonnene Furnierholz 41 diagonal oder schräg zu Abschnitten 42, 42', 43, 43' geteilt, wie zersägt oder geschnitten, und die Abschnitte 42, 42', resp. 43, 43' entlang der Stirnkanten wieder gefügt werden. Ein Fügen durch Verbinden entlang der Stirnkanten, kann z.B. durch Kleben erfolgen. Beispielsweise können etwa quadratische Furnierhölzer 41 diagonal in dreieckige Abschnitte 42, 42', 43, 43' geteilt werden. Jeweils zwei der dreieckförmigen Abschnitte 42, 42', resp. 43, 43' werden über die Stirnseiten welche die Hypotenuse bilden, wieder gefügt. Es entsteht erneut ein quadratisches Furnierholz 44, 44', jedoch mit diagonal laufendem Faserverlauf. Die fetten Pfeile in den Abbildungen deuten jeweils den Faserverlauf an.

**Patentansprüche**

1. Stirnholzplatte abgetrennt aus einem mehrschichtigen Formkörper in Block- oder Plattenform hoher struktureller Belastbarkeit mit zwei gegenüberliegenden Breitseiten (10, 11) und einer seitlich umlaufenden Stirnseite (6a, 6b, 6c, 6d) enthaltend lagenweise, Breitseite auf Breitseite, geschichtete Balsaholzfurniere (2, 2', 2", 2''') und zwischen den Balsaholzfurnieren (2, 2', 2", 2''') liegend Klebstoffe, wobei die Stirnholzplatte (31) quer zu den Breitseiten des Formkörpers (1) abgetrennt ist, und der über alle verklebten Balsaholzfurniere (2, 2', 2", 2''') gemittelte Faserverlauf der Stirnholzplatte (31) im Wesentlichen senkrecht zur Plattenebene verläuft, **dadurch gekennzeichnet, dass** der Faserverlauf (4) wenigstens eines der Balsaholzfurniere (2, 2', 2", 2''') vom Faserverlauf des oder der anderen Balsaholzfurniere (2, 2', 2", 2''') um 45° bis 90° abweicht, und dass der Faserverlauf (4) wenigstens eines Teiles der Balsaholzfurniere (2, 2', 2", 2''') um 22,5 bis 67,5° bezüglich einer Flächennormalen auf eine Stirnseite (6a, 6b, 6c, 6d) des Formkörpers (1) abweicht.

2. Stirnholzplatte nach Anspruch 1, **dadurch gekennzeichnet, dass** die Balsaholzfurniere (2, 2', 2", 2''') durch Tangentialschnitt in einer Furnierschälmaschine aus Balsaholzstämmen hergestellt sind.

3. Stirnholzplatte nach Anspruch 1 oder 2, **dadurch gekennzeichnet, dass** der Faserverlauf (4) wenigstens eines der Balsaholzfurniere (2, 2', 2", 2''') von 60° bis 90°, vorzugsweise von 75° bis 90° und insbesondere um 90° vom Faserverlauf (4) des oder der anderen Balsaholzfurniere (2, 2', 2", 2''') abweicht.

4. Stirnholzplatte nach einem der Ansprüche 1 bis 3, **dadurch gekennzeichnet, dass** der Faserverlauf (4) eines Balsaholzfurniers (2, 2', 2", 2''') vom Faserverlauf des anliegenden Balsaholzfurniers (2, 2', 2", 2''') oder der anliegenden Balsaholzfurniere (2, 2', 2", 2''') um 45° bis 90°, zweckmässig um 60° bis 90°, vorzugsweise um 75° bis 90° und insbesondere um 90° abweicht.

5. Stirnholzplatte nach einem der Ansprüche 1 bis 4, **dadurch gekennzeichnet, dass** der Faserverlauf (4) der Balsaholzfurniere (2, 2', 2", 2''') mit einer Flächennormalen auf die Stirnholzplatte einen Winkel von 22,5 bis 45°, insbesondere um 45°, einschliesst.

6. Stirnholzplatte nach einem der Ansprüche 1 bis 5, **dadurch gekennzeichnet, dass** die Klebstoffe geschäumte Klebstoffe, vorzugsweise geschäumte polyurethanhaltige Klebstoffe, sind.

7. Stirnholzplatte nach einem der Ansprüche 1 bis 6, **dadurch gekennzeichnet, dass** die Klebstoffe in Mengen von 1 bis 15 Vol.-%, zweckmässig 2 bis 10 Vol.-% und vorzugsweise 3 bis 5 Vol.-%, bezogen auf das Volumen des Formkörpers (1), enthalten sind.

8. Stirnholzplatte nach einem der Ansprüche 1 bis 7, **dadurch gekennzeichnet, dass** der ausreagierte, abgebundene oder aufgeschäumte Klebstoff eine Dichte von 50 kg/m$^3$ bis 300 kg/m$^3$ und der aufgeschäumte Klebstoff vorzugsweise eine Dichte von 50 kg/m$^3$ bis 240 kg/m$^3$ aufweist.

9. Stirnholzplatte nach einem der Ansprüche 1 bis 8, **dadurch gekennzeichnet, dass** der ausreagierte Klebstoff die Dichte des umgebenden Holzes oder eine 0 bis zu 20 Gew.-%, vorzugsweise 0 bis zu 10 Gew.-%, höhere oder niedrigere Dichte, als die des umgebenden Holzes aufweist.

10. Verwendung der Stirnholzplatte (31) nach einem der Ansprüche 1 bis 9 als hochbelastbares Einbauteil oder als Kernmaterial in mehrschichtigen Werkstoffen in Konstruktionen, zweckmässig Brücken, als Brückenträger, als Brückenbefahr- und Brückenbegehflächen, im Transportbereich, als Einlageteil in Flügeln oder Propellern von Windkraftwerken oder die Strömung eines Fluids erzeugenden Vorrichtungen, wobei eine Zug- oder Druckbeanspruchung senkrecht zur Plattenebene erfolgt, oder eine Scher- oder Biegebeanspruchung in der Plattenebene erfolgt.

11. Verfahren zur Herstellung einer Stirnholzplatte nach einem der Ansprüche 1 bis 9, **dadurch gekennzeichnet, dass** Balsaholzfurniere (2, 2', 2", 2''') mit Klebstoff beschichtet, die beschichteten Balsaholzfurniere(2, 2', 2", 2''), bezüglich des Faserverlaufs (4) ausgerichtet, gestapelt werden, wobei der Faserverlauf (4) wenigstens eines einzelnen Balsaholzfurniers (2, 2', 2", 2''') um 45 bis 90° vom Faserverlauf des anliegenden Holzfurniers (2, 2', 2", 2''') abweicht, der Klebstoff aktiviert und unter Ausbildung von Haftkraft drucklos oder unter Einfluss von Wärme und/oder Druck zum Formkörper (1) verfestigt werden, und der Formkörper (1) quer zur Breitseite (10, 11) zu einer Anzahl StirnholzPlatten gesägt oder anderweitig getrennt wird.

12. Verfahren nach Anspruch 11, **dadurch gekennzeichnet, dass** ein schäumender Klebstoff verwendet wird und die Aktivierung und Verfestigung des Klebstoffs im Wesentlichen drucklos oder unter einem geringen Druck von weniger als 1 bar erfolgt.

13. Verfahren nach Anspruch 11 oder 12, **dadurch gekennzeichnet, dass** die Balsaholzfurniere (2, 2', 2", 2''') mit Klebstoff beschichtet, bezüglich des Faserverlaufes (4) gerichtet und derart gestapelt werden, dass der Faserverlauf jedes einzelnen Balsaholzfurniers (2, 2', 2", 2''') um 45 bis 90°, zweckmässig um 60° bis 90°, vorzugsweise um 75° bis 90° und insbesondere um 90° von der Richtung des Faserverlaufes (4) des oder der nächstliegenden Balsaholzfurniere (2, 2', 2", 2''') abweicht.

14. Verfahren nach Anspruch 13, **dadurch gekennzeichnet, dass** die Trennung des Formkörpers (1) in Stirnholzplatten (31) derart erfolgt, dass der Faserverlauf (4) der einzelnen Balsaholzfurniere (2, 2', 2", 2''') mit der Flächennormalen auf die Stirnholzplatte einen Winkel von 22,5 bis 45°, insbesondere um 45°, einschliesst.

**Claims**

1. End-grain panel separated from a multilayer formed body, in block or panel form, of high structural strength having two opposite broad faces (10, 11) and a laterally encircling side face (6a, 6b, 6c, 6d) containing, in layers, broad face to broad face, coated balsa wood veneers (2, 2', 2", 2''') and adhesives lying between the balsa wood veneers (2, 2', 2", 2'''), the end-grain panel (31) being separated transversely to the broad faces of the formed body (1), and the grain of the end-grain panel (31) averaged over all bonded balsa wood veneers (2, 2', 2", 2''') being substantially perpendicular to the panel plane, **characterized in that** the grain (4) of at least one of the balsa wood veneers (2, 2', 2", 2''') deviates by 45° to 90° from the grain of the other balsa wood veneer(s) (2, 2', 2", 2'''), and **in that** the grain (4) of at least some of the balsa wood veneers (2, 2', 2", 2''') deviates by 22.5° to 67.5° relative to a surface normal to a side face (6a, 6b, 6c, 6d) of the formed body (1).

**2.** End-grain panel according to claim 1, **characterized in that** the balsa wood veneers (2, 2', 2", 2"') are made from balsa wood trunks, by a tangential cut in a veneer peeling machine.

**3.** End-grain panel according to either claim 1 or claim 2, **characterized in that** the grain (4) of at least one of the balsa wood veneers (2, 2', 2", 2"') deviates from 60° to 90°, preferably from 75° to 90° and in particular by 90° from the grain (4) of the other balsa wood veneers (2, 2', 2", 2"').

**4.** End-grain panel according to any of claims 1 to 3, **characterized in that** the grain (4) of one balsa wood veneer (2, 2', 2", 2"') deviates by 45° to 90°, expediently by 60° to 90°, preferably by 75° to 90° and in particular by 90° from the grain of the adjacent balsa wood veneer (2, 2', 2", 2"') or the adjacent balsa wood veneers (2, 2', 2", 2"').

**5.** End-grain panel according to any of claims 1 to 4, **characterized in that** the grain (4) of the balsa wood veneers (2, 2', 2", 2"') includes an angle of 22.5° to 45°, in particular 45°, with a surface normal to the end-grain panel.

**6.** End-grain panel according to any of claims 1 to 5, **characterized in that** the adhesives are foamed adhesives, preferably foamed polyurethane-containing adhesives.

**7.** End-grain panel according to any of claims 1 to 6, **characterized in that** the adhesives are included in amounts of 1 to 15 vol.%, expediently 2 to 10 vol.% and preferably 3 to 5 vol.%, based on the volume of the formed body (1).

**8.** End-grain panel according to any of claims 1 to 7, **characterized in that** the reacted, set or foamed adhesive has a density of 50 kg/m$^3$ to 300 kg/m$^3$ and the foamed adhesive preferably has a density of 50 kg/m$^3$ up to 240 kg/m$^3$.

**9.** End-grain panel according to any of claims 1 to 8, **characterized in that** the reacted adhesive has the density of the surrounding wood or a density which is 0 to 20 wt.%, preferably 0 to 10 wt.%, higher or lower than that of the surrounding wood.

**10.** Use of the end-grain panel (31) according to any of claims 1 to 9 as a heavy-duty built-in part or as core material in multi-layer materials in structures, expediently in bridges, as bridge beams, as bridge driving and bridge walking surfaces, in the transport sector, as a built-in part in wings or propellers of wind power plants or in devices generating the flow of a fluid, wherein there is tensile or compressive stress perpendicular to the panel plane, or there is shear or bending stress in the panel plane.

**11.** Method for producing an end-grain panel according to any of claims 1 to 9, **characterized in that** balsa wood veneers (2, 2', 2", 2"') are coated with adhesive, the coated balsa wood veneers (2, 2', 2", 2"') are stacked so as to be aligned with respect to the grain (4), the grain (4) of at least one single balsa wood veneer (2, 2', 2", 2"') deviating by 45° to 90° from the grain of the adjacent wood veneer (2, 2', 2", 2"'), the adhesive being activated and solidified, under formation of adhesive force without pressure or under the influence of heat and/or pressure, to form the formed body (1), and the formed body (1) being sawed or otherwise separated into a number of end-grain panels transversely to the broad face (10, 11).

**12.** Method according to claim 11, **characterized in that** a foaming adhesive is used and the activation and solidification of the adhesive takes place substantially without pressure or under a low pressure of less than 1 bar.

**13.** Method according to either claim 11 or claim 12, **characterized in that** the balsa wood veneers (2, 2', 2", 2"') are coated with adhesive, and aligned and stacked with respect to the grain (4) such that the grain of each individual balsa wood veneer (2, 2', 2", 2"') deviates by 45 to 90°, expediently by 60° to 90°, preferably by 75° to 90° and in particular by 90° from the direction of the grain (4) of the nearest balsa wood veneer(s) (2, 2', 2", 2"').

**14.** Method according to claim 13, **characterized in that** the separation of the formed body (1) into end-grain panels (31) takes place such that the grain (4) of the individual balsa wood veneers (2, 2', 2", 2"') includes an angle of 22.5° to 45°, in particular 45°, with the surface normal to the end-grain panel.

**Revendications**

**1.** Panneau de bois frontal détaché d'un corps moulé multicouche en forme de bloc ou de panneau et doté d'une capacité de charge structurelle élevée avec deux côtés larges (10, 11) opposés et un côté frontal (6a, 6b, 6c, 6d) faisant le tour latéralement contenant par couches, côté large sur côté large, des placages en bois de balsa (2, 2', 2", 2"') stratifiés et des colles situées entre les placages en bois de balsa (2, 2', 2", 2"'), dans lequel le panneau de bois frontal (31) est détaché transversalement par rapport aux côtés larges du corps moulé (1), et le fibrage du panneau de bois frontal (31) moyenné sur tous les placages en bois de balsa (2, 2', 2", 2"') collés se déroule essentiellement à la perpendiculaire du plan du panneau,

**caractérisé en ce que**

le fibrage (4) d'au moins un des placages en bois de balsa (2, 2', 2", 2''') diverge du fibrage du ou des autres placages en bois de balsa (2, 2', 2", 2''') de 45° à 90°, et **en ce que** le fibrage (4) d'au moins une partie des placages en bois de balsa (2, 2', 2", 2''') diverge de 22,5 à 67,5° par rapport à une normale surfacique sur un côté frontal (6a, 6b, 6c, 6d) du corps moulé (1).

2. Panneau de bois frontal selon la revendication 1, **caractérisé en ce que** les placages en bois de balsa (2, 2', 2", 2''') sont fabriqués à partir de troncs de bois de balsa via une section tangentielle dans une dérouleuse de placages.

3. Panneau de bois frontal selon la revendication 1 ou 2, **caractérisé en ce que** le fibrage (4) d'au moins un des placages en bois de balsa (2, 2', 2", 2''') diverge du fibrage (4) du ou des autres placages en bois de balsa (2, 2', 2", 2''') de 60° à 90°, de préférence de 75° à 90° et en particulier de 90°.

4. Panneau de bois frontal selon l'une des revendications 1 à 3, **caractérisé en ce que** le fibrage (4) d'un placage en bois de balsa (2, 2', 2", 2''') diverge du fibrage du placage en bois de balsa (2, 2', 2", 2''') adjacent ou des placages en bois de balsa (2, 2', 2", 2''') adjacents de 45° à 90°, de manière appropriée de 60° à 90°, de préférence de 75° à 90° et en particulier de 90°.

5. Panneau de bois frontal selon l'une des revendications 1 à 4, **caractérisé en ce que** le fibrage (4) du placage en bois de balsa (2, 2', 2", 2''') inclut un angle de 22,5 à 45°, en particulier de 45°, avec une normale surfacique sur le panneau de bois frontal.

6. Panneau de bois frontal selon l'une des revendications 1 à 5, **caractérisé en ce que** les colles sont des colles moussantes, de préférence des colles moussantes contenant du polyuréthane.

7. Panneau de bois frontal selon l'une des revendications 1 à 6, **caractérisé en ce que** les colles sont contenues dans des quantités de 1 à 15 % en volume, de manière appropriée de 2 à 10 % en volume et de préférence de 3 à 5 % en volume par rapport au volume du corps moulé (1).

8. Panneau de bois frontal selon l'une des revendications 1 à 7, **caractérisé en ce que** la colle ayant réagi, durcie ou expansée présente une densité de 50 kg/m$^3$ à 300 kg/m$^3$ et la colle expansée présente de préférence une densité de 50 kg/m$^3$ à 240 kg/m$^3$.

9. Panneau de bois frontal selon l'une des revendications 1 à 8, **caractérisé en ce que** la colle ayant réagi présente la densité du bois alentour ou une densité supérieure ou inférieure de 0 à 20 % en poids, de préférence de 0 à 10 % en poids par rapport à celle du bois alentour.

10. Utilisation du panneau de bois frontal (31) selon l'une des revendications 1 à 9 en tant que pièce incorporée à capacité de charge élevée ou en tant que matériau de cœur dans des matériaux multicouches dans des constructions, de manière appropriée des ponts, en tant que ponts porteurs, en tant que surfaces de roulement et de déplacement de pont, dans le domaine des transports, en tant que pièce de remplissage dans des pales ou des hélices de centrales éoliennes ou des dispositifs produisant l'écoulement d'un fluide, dans lequel une contrainte de traction ou de compression se produit perpendiculairement au plan du panneau, ou une contrainte de cisaillement ou de flexion se produit dans le panneau.

11. Procédé de fabrication d'un panneau de bois frontal selon l'une des revendications 1 à 9, **caractérisé en ce que**

des placages en bois de balsa (2, 2', 2", 2''') sont recouverts de colle, les placages en bois de balsa (2, 2', 2", 2''') recouverts sont empilés en étant orientés par rapport au fibrage (4), dans lequel le fibrage (4) d'au moins un placage en bois de balsa (2, 2', 2", 2''') individuel diverge du fibrage du placage en bois de balsa (2, 2', 2", 2''') adjacent de 45° à 90°, la colle est activée et consolidée contre le corps moulé (1) par la formation d'une adhésivité sans pression ou sous l'influence de chaleur et/ou de pression, et le corps moulé (1) est scié ou autrement détaché transversalement par rapport au côté large (10, 11) en un certain nombre de panneaux de bois frontaux.

12. Procédé selon la revendication 11, **caractérisé en ce qu'**une colle moussante est utilisée et l'activation et la consolidation de la colle se produisent essentiellement sans pression ou sous une pression réduite inférieure à 1 bar.

13. Procédé selon la revendication 11 ou 12, **caractérisé en ce que** les placages en bois de balsa (2, 2', 2", 2''') sont recouverts de colle, orientés par rapport au fibrage (4) et empilés de telle sorte que le fibrage de chaque placage en bois de balsa (2, 2', 2", 2''') individuel diverge de la direction du fibrage (4) du ou des placage en bois de balsa (2, 2', 2", 2''') adjacents de 45° à 90°, de manière appropriée de 60° à 90°, de préférence de 75° à 90° et en particulier de 90°.

14. Procédé selon la revendication 13, **caractérisé en ce que** le détachement du corps moulé (1) en panneaux de bois frontaux (31) se produit de telle sorte que le fibrage (4) des placages en bois de balsa (2, 2', 2", 2''') individuels inclut un angle de 22,5 à 45°, en particulier de 45°, avec la normale surfacique sur le panneau de bois frontal.

# Fig.1

## Fig.2

## Fig.3

# Fig.4

# Fig.5

# Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6162312 A
- US 2009053452 A1
- DE 29502290 U1
- AT 507249 A2
- WO 2009138197 A